# EUROPEAN PATENT APPLICATION

(11) **EP 4 844 590 A1**
(43) Date of publication of application: **25.11.2026**
(21) Application number: 26166055.9
(22) Date of filing: 19.03.2026
(51) Int. Cl.: G06F 11/34, G06F 11/30, G06F 11/00

(54) **MACHINE LEARNING BASED PERFORMANCE ESTIMATOR FOR LARGE SCALE WORKLOADS**

(30) Priority: 25.03.2025 US 202563777240 P; 05.02.2026 US 202619530475
(71) Applicant: Google LLC, Mountain View, CA 94043 (US)
(72) Inventor: PAN, Yuechao, Mountain View, California, 94043 (US); FENG, Ziqiang, Mountain View, California, 94043 (US); ALBRECHT, Ben, Mountain View, California, 94043 (US); ESRAEILIAN, Nathaniel, Mountain View, California, 94043 (US); GOVINDARAJ, Vineetha, Mountain View, California, 94043 (US); WEI, Jinliang, Mountain View, California, 94043 (US); WANG, Shibo, Mountain View, California, 94043 (US); ZHOU, Zongwei, Mountain View, California, 94043 (US)
(74) Representative: Betten & Resch

(57) **Abstract**

Aspects of the disclosure are directed to estimating the performance of workloads with reduced hardware utilization. This results in significant reduction in processing and memory costs to estimate the performance of workloads, as less hardware resources are involved to accurately estimate the performance of a workload. To estimate the performance with reduced hardware utilization, the workload is rewritten for local operations on the reduced hardware and the rewritten workload is run on the reduced hardware to generate a reduced hardware profile, including a reduced hardware performance. The workload is also input to a machine learning model trained to determine a communication cost for the workload. The machine learning model outputs the communication cost for the workload. The reduced hardware profile is combined with the communication cost to generate an estimated profile, including the estimated performance for the workload.

## Description

### CROSS-REFERENCE TO RELATED APPLICATIONS

The present application claims the benefit of the filing date of U.S. Provisional Patent Application No. 63/777,240, filed March 25, 2025, the disclosure of which is hereby incorporated herein by reference.

### BACKGROUND

Measuring the execution time of artificial intelligence and/or machine learning (AI/ML) workloads can help with resource planning and/or performance optimization. However, AI/ML workloads are scaling bigger in terms of both model sizes, e.g., number of parameters, and hardware utilization, e.g., number of accelerators to deploy the models. Therefore, measuring the execution time of AI/ML workloads can involve a considerable amount of hardware. For example, if a ML workload runs on 1024 chips, determining the execution time would involve those 1024 chips. This results in significant processing and memory costs for estimating performance of AI/ML workloads.

### BRIEF SUMMARY

Aspects of the disclosure are directed to estimating the performance of workloads with reduced hardware utilization, e.g., a single accelerator. For example, a single chip can be utilized to accurately determine the execution time of a machine learning workload that runs on 1024 chips. This results in significant reduction in processing and memory costs to estimate the performance of workloads, as less hardware resources are involved to accurately estimate the performance of a workload.

To estimate the performance with reduced hardware utilization, the workload is rewritten for local operations on the reduced hardware and the rewritten workload is run on the reduced hardware to generate a reduced hardware profile, including a reduced hardware performance. The workload is also input to a machine learning model trained to determine a communication cost for the workload. The machine learning model outputs the communication cost for the workload. The reduced hardware profile is combined with the communication cost to generate an estimated profile, including the estimated performance for the workload.

An aspect of the disclosure provides for a method for estimating a performance of a workload including: receiving, by one or more processors, a workload to be run on a plurality of hardware resources; rewriting, by the one or more processors, the workload to run on reduced hardware resources; running, by the one or more processors, the workload on the reduced hardware resources to generate a reduced hardware performance; estimating, by the one or more processors, a communication cost for the workload to run on the plurality of hardware resources using a machine learning model; combining, by the one or more processors, the reduced hardware performance with the communication cost to generate an estimated performance for the workload; and outputting, by the one or more processors, the estimated performance.

Another aspect of the disclosure provides for a system including: one or more processors; and one or more storage devices coupled to the one or more processors and storing instructions that, when executed by the one or more processors, cause the one or more processors to perform the method for estimating a performance of a workload. Yet another aspect of the disclosure provides for a non-transitory computer readable medium for storing instructions that, when executed by one or more processors, cause the one or more processors to perform the method for estimating a performance of a workload. Yet another aspect of the disclosure provides for a computer program including instructions that, when executed by one or more processors, cause the one or more processors to perform the method for estimating a performance of a workload.

In some examples, the workload includes at least one of an artificial intelligence or machine learning workload. In some examples, the plurality of hardware resources includes a plurality of accelerators. In some examples, the reduced hardware resources include a single accelerator. In some examples, the estimated performance includes an estimated execution time to run the workload.

In some examples, the method further includes compiling, by the one or more processors, the workload.

In some examples, rewriting the workload further includes modifying the workload to replace any communication to hardware resources not part of the reduced hardware resources with placeholder operations. In some examples, the reduced hardware performance includes an execution time for the workload when performed on the reduced hardware resources.

In some examples, the communication cost includes a communication time for the plurality of hardware resources to communicate with each other in performing the workload. In some examples, the machine learning model includes a communication cost model trained to predict the communication cost based on compensated latency and throughput predictions. In some examples, the machine learning model is trained on communication benchmarks from at least one of various accelerator versions, accelerator topologies, communication types, replica groups, or communication sizes.

In some examples, combining the reduced hardware performance with the communication cost further includes adding estimated communication times for placeholder operations while accounting for computation and communication overlaps and dependencies among the plurality of hardware resources.

### BRIEF DESCRIPTION OF THE DRAWINGS

FIG. 1 depicts a block diagram of an example workload performance estimator according to aspects of the disclosure.
FIG. 2 depicts a block diagram of an example performance estimation system according to aspects of the disclosure.
FIG. 3 depicts a block diagram of an example environment for implementing the performance estimation system according to aspects of the disclosure.
FIG. 4 depicts a block diagram of one or more machine learning model architectures according to aspects of the disclosure.
FIG. 5 depicts a flow diagram of an example process for estimating performance of a workload according to aspects of the disclosure.

### DETAILED DESCRIPTION

The technology generally relates to estimating the performance of workloads with reduced hardware resource utilization. The workload is rewritten for the reduced hardware utilization and run on the reduced hardware to generate a reduced hardware performance. A communication cost is estimated for the workload using a machine learning model. The reduced hardware performance is combined with the communication cost to generate the estimated performance for the workload. The performance may be estimated using one to a few of the hardware resources rather than the hundreds to thousands of hardware resources involved in performing the workload. Since fewer hardware resources are involved to accurately estimate the performance of the workload, processing cost and memory usage is reduced.

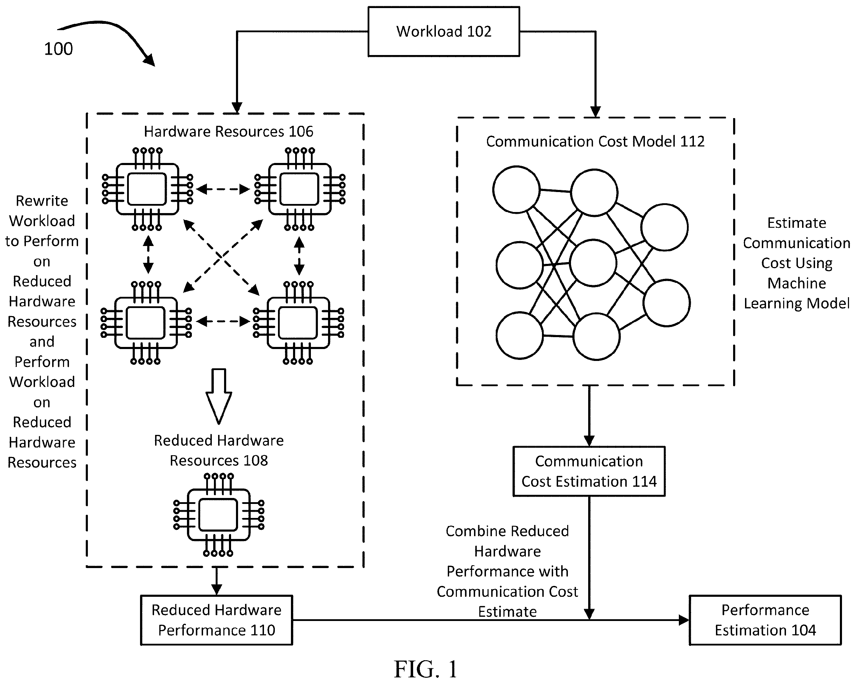

FIG. 1 depicts a block diagram of an example workload performance estimator 100. The performance estimator 100 receives a workload 102 for performance estimation 104. Workloads 102 may refer to large scale workloads involving communication among hundreds to thousands of hardware resources 106. Example workloads include artificial intelligence and/or machine learning (AI/ML) workloads, such as large language model training. Hardware resources 106 may refer to accelerators and/or processors that perform the workload. Example hardware resources may include central processing units (CPUs), graphics processing units (GPUs), and/or application specific integrated circuits (ASICs). The performance estimator 100 may compile the workload 102 and/or receive an already compiled workload 102 for performance estimation 104. Performance may refer to an execution time of the workload 102. Therefore, performance estimation 104 may refer to estimating the execution time of the workload 102.

The performance estimator 100 rewrites the workload 102 to run on reduced hardware resources 108. Reduced hardware resources 108 may refer to an amount of hardware resources that is less than the amount of hardware resources 106 for running the workload 102. For example, the reduced hardware resources may be a single accelerator or a few accelerators while the hardware resources may be hundreds or thousands of accelerators. The performance estimator 100 can modify the workload 102 to only include local operations, e.g., operations for the reduced hardware resources 108 to run the workload 102. For example, the performance estimator 100 can replace any communications to hardware resources 106 not part of the reduced hardware resources 108 with placeholder operations.

The performance estimator 100 runs the workload 102 on the reduced hardware resources 108 to generate a reduced hardware performance 110. The reduced hardware performance 110 may refer to the actual execution time of the rewritten workload 102 when performed by the reduced hardware resources 108.

The performance estimator 100 estimates a communication cost for the workload 102 using a machine learning model. The communication cost may refer to a communication time for the hardware resources 106 to communicate with each other in performing the workload 102. The machine learning model may be a communication cost model 112 trained to predict the communication time based on compensated latency and throughput predictions. For example, the communication cost model 112 can be a linear regression model. The communication cost model 112 can output a communication cost estimation 114.

The communication cost model 112 can be trained on communication benchmarks from various hardware resources, including different accelerator versions, accelerator topologies, communication types, replica groups, and/or communication sizes. Accelerator versions may refer to older and/or newer generations of accelerators. Accelerator topologies may refer to number of chips, e.g., 1 k to 2 k chips, and/or arrangement of the chips, e.g., twisted torus and/or untwisted torus. Communication types may refer to collective operations, such as allReduce, allGather, reduceScatter, and/or allToall. Communication size may refer to the amount of data being communicated, e.g., 4 B to 4 GB. Replica groups may refer to a group of accelerators that a communication operation runs on and determine how a physical grid of accelerators is sub-divided, e.g., 16 (4 x 4) replica groups on a 4 x 4 x 8 topology.

The communication benchmarks may include profiles and logs. The profiles may refer to the execution times, which may be aggregated into statistics, e.g., minimum, maximum, average, and/or distribution, about the communication benchmarks to improve the speed at which the communication cost model 112 is trained and the accuracy of the communication cost model 112. The logs may refer to compiler debug information, such as communication operation algorithms, for grouping the profiles to improve the speed and accuracy of the communication cost model 112.

Different communication sizes of accelerator version, accelerator topology, communication type, and/or replica group can each form a series. The communication cost model 112 can include a linear model configured to predict latencies for each series and a linear model configured to predict throughput for each series. If any data points do not meet accuracy thresholds, the communication cost model 112 includes a linear model to predict compensations for the range of communication sizes outside the accuracy threshold. For example, the communication cost model 112 can predict a communication time, where predicted communication time = predicted latency + (data size - latency data size) / predicted throughput - predicted compensation. Further, predetermined adjustment points may be added to move the linear regression at specific places based on communication operations meeting a condition, allowing for improved generalization and accuracy. For example, subgroups with dimensions being multiples of 3 may diverge slightly from other replica groups. Therefore, adding adjustments for subgroups with dimensions that are multiples of 3 can improve accuracy while maintaining generalization. The predicted communication time can be the communication cost estimation 114.

The performance estimator 100 combines the reduced hardware performance 110 with the communication cost estimation 114 to generate the performance estimation 104. The performance estimator 100 may determine the execution time of the workload 102 run on the reduced hardware 108 by adding communication times for the placeholder operations while accounting for any interaction between local computation and communication, e.g., computation and communication overlaps and dependencies from pipeline parallelism.

For example, allGather is a communication operation that may be executed without overlap, so its predicted time from the communication cost estimation 114 can be added to the performance estimation 104. However, as another example, collectivePermute is a communication operation that may have start and done operations and may overlap with convolution operations. If an overlap occurs, a portion of the predicted time, rather than the entire predicted time, from the communication cost estimation 114 can be added to the performance estimation 104 to account for the overlap.

To account for pipeline parallelism, e.g., different accelerators may have different execution times, for example, the estimated pipeline time = (per-stage time + inter-stage communication time) * (number of stages - 1) + max(per-stage time, inter-stage communication time) * number of micro-batches. Stages may refer to the different accelerators and may be divided across the accelerators. For example, a workload may have 8 stages. Therefore, when running on 4 accelerators, each accelerator can be responsible for running 2 stages locally. Forward pass and backward pass micro-batches have separate dependencies across accelerators, so the estimated pipeline time may be determined for the forward pass and the backward pass separately. The performance estimator 100 can extract the per-stage time and inter-stage communication time from the performance estimation 104 and adjust the performance estimation 104 to account for the estimated pipeline time.

The performance estimation 104 can be accurately determined using significantly less hardware resources, allowing for reduced processing cost and memory usage in predicting execution times of workloads.

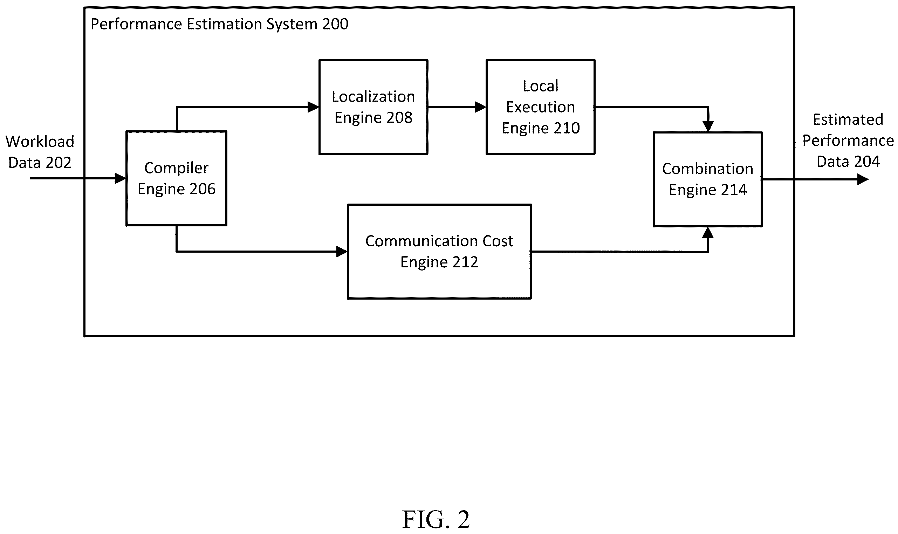

FIG. 2 depicts a block diagram of an example performance estimation system 200. The performance estimation system 200 can be implemented on one or more computing devices in one or more locations. The performance estimation system 200 can correspond to the performance estimator 100 as depicted in FIG. 1.

The performance estimation system 200 can be configured to receive input data, including workload data 202. The workload data 202 can include instructions for performing a workload, such as instructions for training a large language model. For example, the performance estimation system 200 can receive the workload data 202 as part of a call to an application programming interface (API) exposing the performance estimation system 200 to one or more computing devices. The performance estimation system 200 can also receive the workload data 202 through a storage medium, such as remote storage connected to one or more computing devices over a network. The performance estimation system 200 can further receive the workload data 202 through a user interface on a client computing device coupled to the performance estimation system 200.

Based on the workload data 202, the performance estimation system 200 can output estimated performance data 204. The estimated performance data 204 can include an estimated execution time to perform the workload. As an example, the performance estimation system 200 can be configured to send the estimated performance data 204 for display on a client or user display. As another example, the performance estimation system 200 can be configured to provide the estimated performance data 204 as a set of computer-readable instructions, such as one or more computer programs for performing workloads. The computer programs can be written in any type of programming language, and according to any programming paradigm, e.g., declarative, procedural, assembly, object-oriented, data-oriented, functional, or imperative. The computer programs can be written to perform one or more different functions and to operate within a computing environment, e.g., on a physical device, virtual machine, or across multiple devices. The computer programs can also implement functionality described herein, for example, as performed by a system, engine, module, or model. The performance estimation system 200 can further be configured to forward the estimated performance data 204 to one or more other devices configured for translating the output data for display or into an executable program written in a computer programming language for performing the workload. The performance estimation system 200 can also be configured to send the estimated performance data 204 to a storage device for storage and later retrieval.

The performance estimation system 200 can include a compiler engine 206, a localization engine 208, a local execution engine 210, a communication cost engine 212, and a combination engine 214. The compiler engine 206, localization engine 208, local execution engine 210, communication cost engine 212, and combination engine 214 can be implemented as one or more computer programs, specially configured electronic circuitry, or any combination thereof.

The compiler engine 206 can be configured to compile the workload. The compiler engine 206 can convert the workload data 202 into a lower-level programming language, e.g., object code or machine code, for execution. The compiler engine 206 can transmit the compiled workload to the localization engine 208 and the communication cost engine 212. Alternatively, the performance estimation system 200 may receive workload data 202 that is already compiled. In this example, the performance estimation system 200 may not include a compiler engine 206, and the localization engine 208 and communication engine 212 may receive the workload data 202 instead.

The localization engine 208 can be configured to rewrite the compiled workload to run on reduced hardware resources. For example, the localization engine 208 can be configured to rewrite the compiled workload to run on a single accelerator. The localization engine 208 can modify the compiled workload to include only local operations, e.g., operations run on the single accelerator. The localization engine 208 can replace any communications to other hardware resources with placeholder operations. The localization engine 208 can transmit the rewritten workload to the local execution engine 210.

The local execution engine 210 can be configured to run the rewritten workload on the reduced hardware resources. For example, the local execution engine 210 can be configured to run the rewritten workload on the single accelerator. The local execution engine 210 can generate a local execution profile from running the rewritten workload on the reduced hardware resources. The local execution profile can include an actual execution time for the rewritten workload. The local execution engine 210 can transmit the local execution profile to the combination engine 214.

The communication cost engine 212 can be configured to estimate a communication cost for the workload using a communication cost machine learning model. The communication cost model can be trained to predict a communication time based on compensated latency and throughput predictions. The communication cost model can include a linear regression model configured to predict latencies and a linear regression model configured to predict throughput for multiple series of communication sizes for different accelerator versions, accelerator topologies, communication types, and/or replica groups. The communication cost model can also include a linear regression model configured to predict compensations for any ranges of communication size outside a predetermined accuracy threshold. For example, the communication cost model can predict a communication time, where predicted communication time = predicted latency + (data size - latency data size) / predicted throughput - predicted compensation. The communication cost engine 212 can transmit the estimated communication cost to the combination engine 214.

The combination engine 214 can be configured to combine the local execution profile with the estimated communication cost to generate a performance profile for the workload. The performance profile can include an estimated performance for the workload, including an estimated execution time for the hardware resources to complete the workload. The combination engine 214 can adjust the local execution profile by adding the estimated communication time to the placeholder operations. The combination engine 214 can account for interactions between the local computation and communication, including overlaps and dependencies. For example, the combination engine 214 can shorten the predicted communication time based on a communication type overlapping with another communication type. As another example, the combination engine 214 can account for pipeline parallelism by estimating a pipeline time that accounts for per-accelerator time and inter-accelerator communication time. The combination engine 214 can output the performance profile for the workload as part of the estimated performance data 204.

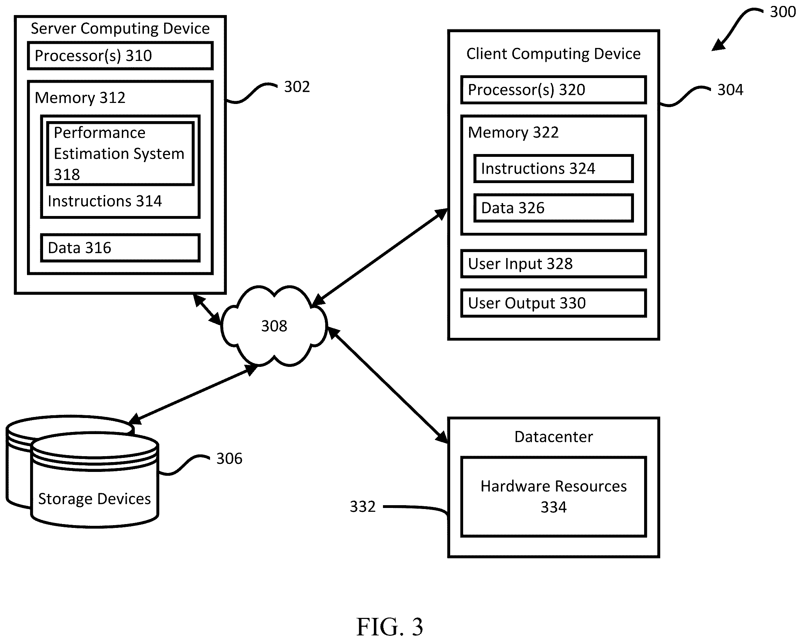

FIG. 3 depicts a block diagram of an example environment 300 for implementing a performance estimation system 318. The performance estimation system 318 can be implemented on one or more devices having one or more processors in one or more locations, such as in server computing device 302. A client computing device 304 and the server computing device 302 can be communicatively coupled to one or more storage devices 306 over a network 308. The storage devices 306 can be a combination of volatile and non-volatile memory and can be at the same or different physical locations than the computing devices 302, 304. For example, the storage devices 306 can include any type of non-transitory computer readable medium capable of storing information, such as a hard-drive, solid state drive, tape drive, optical storage, memory card, ROM, RAM, DVD, CD-ROM, write-capable, and read-only memories.

The server computing device 302 can include one or more processors 310 and memory 312. The memory 312 can store information accessible by the processors 310, including instructions 314 that can be executed by the processors 310. The memory 312 can also include data 316 that can be retrieved, manipulated, or stored by the processors 310. The memory 312 can be a type of transitory or non-transitory computer readable medium capable of storing information accessible by the processors 310, such as volatile and non-volatile memory. The processors 310 can include one or more central processing units (CPUs), graphic processing units (GPUs), field-programmable gate arrays (FPGAs), and/or application-specific integrated circuits (ASICs).

The instructions 314 can include one or more instructions that, when executed by the processors 310, cause the one or more processors 310 to perform actions defined by the instructions 314. The instructions 314 can be stored in object code format for direct processing by the processors 310, or in other formats including interpretable scripts or collections of independent source code modules that are interpreted on demand or compiled in advance. The instructions 314 can include instructions for implementing the performance estimation system 318, which can correspond to the performance estimation system 200 as depicted in FIG. 2. The performance estimation system 318 can be executed using the processors 310, and/or using other processors remotely located from the server computing device 302.

The data 316 can be retrieved, stored, or modified by the processors 310 in accordance with the instructions 314. The data 316 can be stored in computer registers, in a relational or non-relational database as a table having a plurality of different fields and records, or as JSON, YAML, proto, or XML documents. The data 316 can also be formatted in a computer-readable format such as, but not limited to, binary values, ASCII, or Unicode. Moreover, the data 316 can include information sufficient to identify relevant information, such as numbers, descriptive text, proprietary codes, pointers, references to data stored in other memories, including other network locations, or information that is used by a function to calculate relevant data.

The client computing device 304 can also be configured similarly to the server computing device 302, with one or more processors 320, memory 322, instructions 324, and data 326. The client computing device 304 can also include a user input 328 and a user output 330. The user input 328 can include any appropriate mechanism or technique for receiving input from a user, such as keyboard, mouse, mechanical actuators, soft actuators, touchscreens, microphones, and sensors.

The server computing device 302 can be configured to transmit data to the client computing device 304, and the client computing device 304 can be configured to display at least a portion of the received data on a display implemented as part of the user output 330. The user output 330 can also be used for displaying an interface between the client computing device 304 and the server computing device 302. The user output 330 can alternatively or additionally include one or more speakers, transducers or other audio outputs, a haptic interface or other tactile feedback that provides non-visual and non-audible information to the platform user of the client computing device 304.

Although FIG. 3 illustrates the processors 310, 320 and the memories 312, 322 as being within the respective computing devices 302, 304, components described herein can include multiple processors and memories that can operate in different physical locations and not within the same computing device. For example, some of the instructions 314, 324 and the data 316, 326 can be stored on a removable SD card and others within a read-only computer chip. Some or all of the instructions 314, 324 and data 316, 326 can be stored in a location physically remote from, yet still accessible by, the processors 310, 320. Similarly, the processors 310, 320 can include a collection of processors that can perform concurrent and/or sequential operations. The computing devices 302, 304 can each include one or more internal clocks providing timing information, which can be used for time measurement for operations and programs run by the computing devices 302, 304.

The server computing device 302 can be connected over the network 308 to a data center 332 housing any number of hardware resources 334. The data center 332 can be one of multiple data centers or other facilities in which various types of hardware resources 334, such as hardware accelerators, are located. Hardware resources 334 housed in the data center 332 can be specified for deploying models, such as for performing AI/ML workloads, as described herein.

The server computing device 302 can be configured to receive requests to process data from the client computing device 304 on computing resources in the data center 332. For example, the environment 300 can be part of a computing platform configured to provide a variety of services to users, through various user interfaces and/or application programming interfaces (APIs) exposing the platform services. The client computing device 304 can transmit input data as part of a query for a task to estimate the performance of a workload. The performance estimation system 318 can receive the input data, and in response, generate output data including a response to the query including an estimated performance for the workload.

The server computing device 302 can maintain a variety of models in accordance with different constraints available at the data center 332. For example, the server computing device 302 can maintain different families for deploying models on various types of ASICs and/or GPUs housed in the data center 332 or otherwise available for processing.

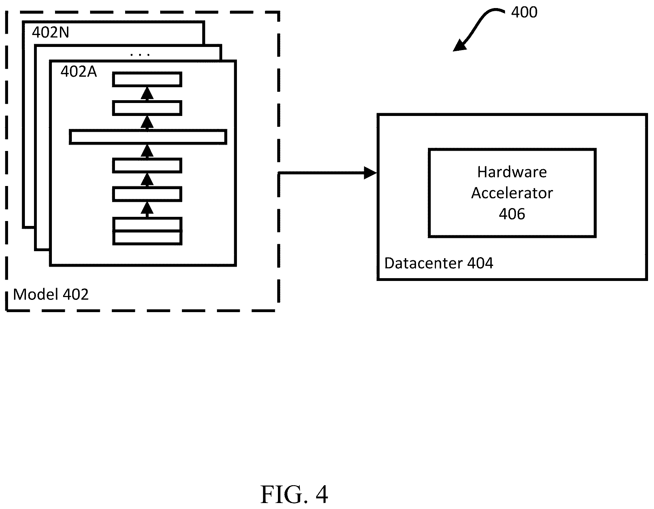

FIG. 4 depicts a block diagram 400 illustrating one or more machine learning model architectures 402 according to aspects of the disclosure. More specifically, FIG. 4 depicts architectures 402A-N for deployment in a datacenter 404 housing a hardware accelerator 406 on which the deployed machine learning models 402 will execute, such as for the variety of services as described herein. The hardware accelerator 406 can be any type of processor, such as a CPU, GPU, FPGA, or ASIC.

An architecture 402 of a machine learning model can refer to characteristics defining the model, such as characteristics of layers for the model, how the layers process input, or how the layers interact with one another. The architecture 402 of the machine learning model can also define types of operations performed within each layer. One or more machine learning model architectures 402 can be generated that can output results involving estimating communication costs for hardware accelerators. Example model architectures 402 can correspond to linear regression models.

The machine learning models can be trained according to a variety of different learning techniques. Learning techniques for training the machine learning models can include supervised learning, unsupervised learning, semi-supervised learning, and reinforcement learning techniques. For example, training data can include multiple training examples that can be received as input by a model. The training examples can be labeled with a desired output for the model when processing the labeled training examples. The label and the model output can be evaluated through a loss function to determine an error, which can be back propagated through the model to update weights for the model. For example, a supervised learning technique can be applied to calculate an error between outputs, with a ground-truth label of a training example processed by the model. Any of a variety of loss or error functions appropriate for the type of the task the model is being trained for can be utilized, such as cross-entropy loss for classification tasks, or mean square error for regression tasks. The gradient of the error with respect to the different weights of the candidate model on candidate hardware can be calculated, for example using a backpropagation algorithm, and the weights for the model can be updated. The model can be trained until stopping criteria are met, such as a number of iterations for training, a maximum period of time, a convergence, or when a minimum accuracy threshold is met.

Referring back to FIG. 3, the devices 302, 304 and the data center 332 can be capable of direct and indirect communication over the network 308. For example, using a network socket, the client computing device 304 can connect to a service operating in the data center 332 through an Internet protocol. The devices 302, 304 can set up listening sockets that may accept an initiating connection for sending and receiving information. The network 308 can include various configurations and protocols including the Internet, World Wide Web, intranets, virtual private networks, wide area networks, local networks, and private networks using communication protocols proprietary to one or more companies. The network 308 can support a variety of short- and long-range connections. The short- and long-range connections may be made over different bandwidths, such as 2.402 GHz to 2.480 GHz, commonly associated with the Bluetooth^{®} standard, 2.4 GHz and 5 GHz, commonly associated with the Wi-Fi^{®} communication protocol; or with a variety of communication standards, such as the LTE^{®} standard for wireless broadband communication. The network 308, in addition or alternatively, can also support wired connections between the devices 302, 304 and the data center 332, including over various types of Ethernet connection.

Although a single server computing device 302, client computing device 304, storage device 306, and data center 332 are shown in FIG. 3, it is understood that aspects of the disclosure can be implemented according to a variety of different configurations and quantities of computing devices, including in paradigms for sequential or parallel processing, or over a distributed network of multiple devices. In some implementations, aspects of the disclosure can be performed on a single device connected to hardware accelerators configured for processing machine learning models, or any combination thereof.

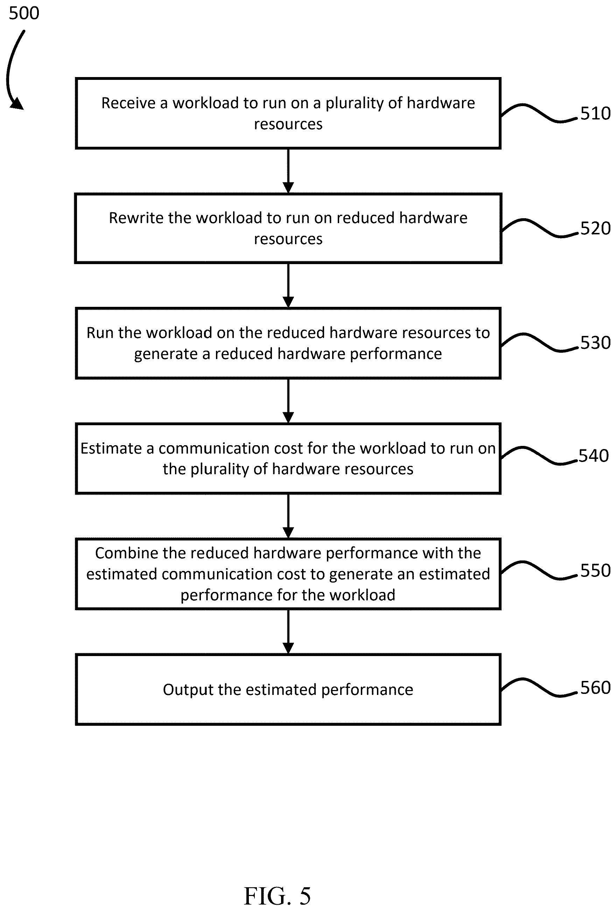

FIG. 5 depicts a flow diagram of an example process 500 for estimating the performance of a workload. The example process 500 can be performed on a system of one or more processors in one or more locations, such as the performance estimation system 200 as depicted in FIG. 2.

As shown in block 510, the performance estimation system 200 receives a workload to be run on a plurality of hardware resources. The workload can include an AI/ML workload. The plurality of resources can include a plurality of accelerators. The performance estimation system 200 can compile the workload or receive an already compiled workload.

As shown in block 520, the performance estimation system 200 rewrites the workload to run on reduced hardware resources. The reduced hardware resources can include a single accelerator. The performance estimation system 200 can modify the workload to replace any communication to hardware resources not part of the reduced hardware resources with placeholder operations.

As shown in block 530, the performance estimation system 200 runs the workload on the reduced hardware resources to generate a reduced hardware performance. The reduced hardware performance can include an execution time for the workload when performed on the reduced hardware resources.

As shown in block 540, the performance estimation system 200 estimates a communication cost for the workload to run on the plurality of hardware resources using a machine learning model. The communication cost can include a communication time for the plurality of hardware resources to communicate with each other in performing the workload. The machine learning model can include a communication cost model trained to predict the communication cost based on compensated latency and throughput predictions. The machine learning model can be trained on communication benchmarks from at least one of various accelerator versions, accelerator topologies, communication types, replica groups, or communication sizes.

As shown in block 550, the performance estimation system 200 combines the reduced hardware performance with the communication cost to generate an estimated performance for the workload. The estimated performance can include an estimated execution time to run the workload on the plurality of hardware resources. The performance estimation system 200 can add estimated communication times for the placeholder operations while accounting for computation and communication overlaps and dependencies among the plurality of hardware resources.

As shown in block 560, the performance estimation system 200 outputs the estimated performance.

Aspects of this disclosure can be implemented in digital electronic circuitry, in tangibly embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, that is generated to encode information for transmission to suitable receiver apparatus for execution by a data processing apparatus.

The term "configured" is used herein in connection with systems and computer program components. For a system of one or more computers to be configured to perform particular operations or actions means that the system has installed thereon software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" or "data processing system" refers to data processing hardware and encompasses various apparatus, devices, and machines for processing data, including programmable processors, computers, or combinations thereof. The data processing apparatus can include special purpose logic circuitry, such as a field programmable gate array (FPGA) or an application specific integrated circuit (ASIC). The data processing apparatus can include code that creates an execution environment for computer programs, such as code that constitutes processor firmware, a protocol stack, a database management system, an operating system, or combinations thereof.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" refers to a software-based system, subsystem, or process that is programmed to perform one or more specific functions. The engine can be implemented as one or more software modules or components or can be installed on one or more computers in one or more locations. A particular engine can have one or more computers dedicated thereto, or multiple engines can be installed and running on the same computer or computers.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back end component, e.g., as a data server, a middleware component, e.g., an application server, or a front end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A method for estimating a performance of a workload comprising:
receiving, by one or more processors, a workload to be run on a plurality of hardware resources;
rewriting, by the one or more processors, the workload to run on reduced hardware resources;
running, by the one or more processors, the workload on the reduced hardware resources to generate a reduced hardware performance;
estimating, by the one or more processors, a communication cost for the workload to run on the plurality of hardware resources using a machine learning model;
combining, by the one or more processors, the reduced hardware performance with the communication cost to generate an estimated performance for the workload; and
outputting, by the one or more processors, the estimated performance.

2. The method of claim 1, wherein the workload comprises at least one of an artificial intelligence or machine learning workload, and/or
wherein the plurality of hardware resources comprises a plurality of accelerators; and/or
wherein the reduced hardware resources comprise a single accelerator; and/or
wherein the estimated performance comprises an estimated execution time to run the workload, and/or
further comprising compiling, by the one or more processors, the workload.

3. The method of claim 1 or claim 2, wherein rewriting the workload further comprises modifying the workload to replace any communication to hardware resources not part of the reduced hardware resources with placeholder operations.

4. The method of one of the preceding claims, wherein the reduced hardware performance comprises an execution time for the workload when performed on the reduced hardware resources.

5. The method of one of the preceding claims, wherein the communication cost comprises a communication time for the plurality of hardware resources to communicate with each other in performing the workload.

6. The method of one of the preceding claims, wherein the machine learning model comprises a communication cost model trained to predict the communication cost based on compensated latency and throughput predictions.

7. The method of one of the preceding claims, wherein the machine learning model is trained on communication benchmarks from at least one of various accelerator versions, accelerator topologies, communication types, replica groups, or communication sizes.

8. The method of one of the preceding claims, wherein combining the reduced hardware performance with the communication cost further comprises adding estimated communication times for placeholder operations while accounting for computation and communication overlaps and dependencies among the plurality of hardware resources.

9. A system comprising:
one or more processors; and
one or more storage devices coupled to the one or more processors and storing instructions that, when executed by the one or more processors, cause the one or more processors to perform a method for estimating a performance of a workload, the method comprising:
receiving a workload to be run on a plurality of hardware resources;
rewriting the workload to run on reduced hardware resources;
running the workload on the reduced hardware resources to generate a reduced hardware performance;
estimating a communication cost for the workload to run on the plurality of hardware resources using a machine learning model;
combining the reduced hardware performance with the communication cost to generate an estimated performance for the workload; and
outputting the estimated performance.

10. The system of claim 9, wherein the workload comprises at least one of an artificial intelligence or machine learning workload; and/or
wherein the plurality of hardware resources comprises a plurality of accelerators and the reduced hardware resources comprise a single accelerator.

11. The system of claim 9 or claim 10, wherein:
the estimated performance comprises an estimated execution time to run the workload;
the reduced hardware performance comprises an execution time for the workload when performed on the reduced hardware resources; and
the communication cost comprises a communication time for the plurality of hardware resources to communicate with each other in performing the workload.

12. The system of one of claims 9 to 11, wherein rewriting the workload further comprises modifying the workload to replace any communication to hardware resources not part of the reduced hardware resources with placeholder operations; and/or
wherein the machine learning model comprises a communication cost model trained to predict the communication cost based on compensated latency and throughput predictions, wherein the machine learning model is trained on communication benchmarks from at least one of various accelerator versions, accelerator topologies, communication types, replica groups, or communication sizes.

13. The system of one of claims 9 to 12, wherein combining the reduced hardware performance with the communication cost further comprises adding estimated communication times for placeholder operations while accounting for computation and communication overlaps and dependencies among the plurality of hardware resources.

14. A non-transitory computer readable medium for storing instructions that, when executed by one or more processors, cause the one or more processors to perform the method according to one of claims 1 to 8.

15. A computer program comprising instructions that, when executed by one or more processors, cause the one or more processors to perform the method according to one of claims 1 to 8.
